# EUROPÄISCHE PATENTSCHRIFT

(11) **EP 4 228 944 B1**
(45) Veröffentlichungstag und Bekanntmachung des Hinweises auf die Patenterteilung: **02.04.2025**
(21) Anmeldenummer: 21785826.5
(22) Anmeldetag: 27.09.2021
(51) Int. Cl.: B60W 30/14, B60W 30/18, B60K 31/00

(54) **VERBESSERTE AUTOMATISCHE ABSTANDSREGELUNG**
IMPROVED ADAPTIVE CRUISE CONTROL
RÉGULATEUR DE VITESSE ADAPTATIF AMÉLIORÉ

(30) Priorität: 19.10.2020 DE 102020213136
(43) Veröffentlichungstag der Anmeldung: 23.08.2023
(73) Patentinhaber: VOLKSWAGEN AKTIENGESELLSCHAFT, 38440 Wolfsburg (DE)
(72) Erfinder: MÜNNING, Daniel, 38124 Braunschweig (DE)
(86) Internationale Anmeldenummer: PCT/EP2021/076544
(87) Internationale Veröffentlichungsnummer: WO 2022/083979

(56) Entgegenhaltungen:
- DE-A1- 4 407 082
- US-A1- 2005 187 697
- US-A1- 2015 100 189

## Beschreibung

Die Erfindung betrifft eine Veto-Einheit für ein ACC-Gerät eines Kraftfahrzeugs, ein System umfassend eine Veto-Einheit und ein ACC-Gerät, ein Kraftfahrzeug, ein Verfahren und ein entsprechendes Computer-Programm.

ACC-Geräte, die auf ein Regelobjekt, beispielsweise in Form eines vorausfahrenden Verkehrsteilnehmers, regeln, sind im Stand der Technik bekannt. Dabei wird ein Soll-Abstand und eine Soll-Geschwindigkeit und/oder Soll-Beschleunigung bestimmt, mit der das eigene Kraftfahrzeug dem Regelobjekt folgt. Wenn der vorausfahrende Verkehrsteilnehmer zum Beispiel an einer Ampel hält, bremst das eigene Kraftfahrzeug ebenfalls und hält den Abstand zum Vorderfahrzeug ein. Fährt das Regelobjekt an und wird eine aktive Fahrerhandlung erkannt zum Beispiel Fahrpedal, Resume-Taste, Hände am kapazitiven Lenkrad, etc. fährt auch das eigene Kraftfahrzeug wieder an vorzugsweise bis auf die voreingestellte Setzgeschwindigkeit. Ein einfaches Regeln auf den vorausfahrenden Verkehrsteilnehmer erfolgt.

Die Offenlegungsschrift DE 10 2017 004 741 A1 betrifft eine Steueranordnung zum Einstellen eines Soll-Abstandes zwischen zwei Fahrzeugen, wobei die Steueranordnung aufweist: ein Abstandsregelsystem mit einer Abstandsregel-Steuereinrichtung zum Einstellen eines ersten Soll-Abstandes zwischen einem Eigenfahrzeug und einem Vorderfahrzeug in Abhängigkeit von einem von einer Sensorik empfangenen Sensor-Signal durch Anfordern einer ersten Eigenfahrzeug-Soll-Beschleunigung, ein Kommunikationssystem zum drahtlosen Senden und Empfangen eines Umgebungsinformationen beinhaltenden Umgebungs-Datensignals, und eine Assistenz-Steuereinrichtung zum Ermitteln eines zweiten Soll-Abstandes zwischen dem Eigenfahrzeug und dem Vorderfahrzeug sowie einer zweiten Eigenfahrzeug-Soll-Beschleunigung zum Einstellen des zweiten Soll-Abstandes jeweils in Abhängigkeit der Umgebungsinformationen. Hierbei ist vorgesehen, dass das Abstandsregelsystem eine ACC-Schnittstelle aufweist, wobei über die ACC-Schnittstelle ein erstes Schnittstellen-Signal auf das Abstandsregelsystem übertragbar ist, wobei das erste Schnittstellen-Signal in Abhängigkeit der Umgebungsinformationen gebildet ist und von dem Abstandsregelsystem der von der Assistenz-Steuereinrichtung ermittelte zweite Soll-Abstand unter Berücksichtigung des ersten Schnittstellen-Signals einstellbar ist. Nachteilig ist hierbei, dass lediglich die Regelungsreichweite des ACC-Systems erweitert wird. Eine weitere Verbesserung des ACC-Systems ist nicht möglich.

Die Offenlegungsschrift DE 10 2015 208 432 A1 betrifft ein Fahrerassistenzsystem zum Veranlassen eines Anfahrvorgangs eines Fahrzeugs. Das Fahrerassistenzsystem weist eine Detektionseinheit und eine Steuereinheit auf. Die Detektionseinheit ist dazu ausgeführt, ein Ampelsignal in der Umgebung des Fahrzeugs zu erfassen und eine Information über einen Zustand einer Ampelschaltung bereitzustellen. Die Detektionseinheit ist dazu ausgeführt, ein Objekt in der Umgebung des Fahrzeugs zu detektieren, um eine Information über das Objekt bereitzustellen. Die Steuereinheit ist dazu ausgeführt, den Anfahrvorgang des Fahrzeugs basierend auf der Information über den Zustand der Ampelschaltung und basierend auf der Information über das Objekt zu veranlassen. Nachteilig ist hierbei, das ein zweites Positiv-Signal, nämlich eine grüne Ampel, erkannt werden muss, um ein Anfahren zu starten. Ein aktives Verhindern des Anfahrens ist mit der offenbarten Lehre nicht möglich.

Die Offenlegungsschrift US 2005 / 187 697 A1 offenbart ein Verfolgungssteuerungssystem zur Durchführung einer Verfolgungssteuerung, bei der ein von dem gegenwärtigen Fahrzeug verfolgtes Zielfahrzeug bestimmt wird. Das Verfolgungssystem erkennt hinsichtlich des gegenwärtigen Fahrzeugs vorausfahrende Objekte und bestimmt eines davon als zu verfolgendes Zielfahrzeug.

Die Offenlegungsschrift US 2015 / 100 189 A1 bezieht sich auf ein Fahrzeugsystem, welches beim Anfahren an ein Verkehrsschild oder eine rote Ampel eine Warnung an den Fahrer des Fahrzeugs zum Verlangsamen des Fahrzeugs ausgeben soll. Bei Nichtbeachtung der Warnung erfolgt fahrzeugseitig ein Eingriff zum Stoppen des Fahrzeugs, um eine Kollision mit einem voranstehenden Fahrzeug oder ein Überfahren der roten Ampel zu vermeiden.

Der Erfindung liegt nun die Aufgabe zugrunde, eine Möglichkeit zu schaffen den Anfahrvorgang mittels eines ACC-Geräts zu verbessern und insbesondere die Sicherheit des Anfahrvorgangs zu erhöhen. Es soll eine robuste und zuverlässige Möglichkeit geschaffen werden ein ACC-Gerät zu verbessern.

Gelöst wird diese Aufgabe durch eine Veto-Einheit für ein ACC-Gerät eines Kraftfahrzeugs, mit:
- einer Eingangsschnittstelle zum Empfangen von Eingangsdaten mit Informationen zu einer Umgebung des Kraftfahrzeugs;
- einer Analyseeinheit, die dazu ausgebildet ist, die Eingangsdaten zu analysieren;
- einer Ausgangsschnittstelle zum Übermitteln eines Vetos, wobei
- die Analyseeinheit dazu ausgebildet ist, basierend auf den Eingangsdaten zu ermitteln, ob ein von dem ACC-Gerät als Regelobjekt verwendeter weiterer Verkehrsteilnehmer als Regelobjekt für das ACC-Gerät verworfen wird und ein Veto zu generieren, wenn der weitere Verkehrsteilnehmer als Regelobjekt für das ACC-Gerät verworfen wird, wobei das Veto dazu eingerichtet ist, dass das das Veto empfangene ACC-Gerät den weiteren Verkehrsteilnehmer als Regelobjekt verwirft; und
- die Ausgangsschnittstelle dazu ausgebildet ist, das Veto zu übermitteln, wenn die Analyseeinheit ermittelt, dass der weitere Verkehrsteilnehmer als Regelobjekt für das ACC-Gerät verworfen wird.

Die obige Aufgabe wird ferner gelöst durch ein System umfassend eine Veto-Einheit, insbesondere eine Veto-Einheit wie zuvor definiert und ein ACC-Gerät, wobei das ACC-Gerät dazu ausgebildet ist, in Reaktion auf ein Veto der Veto-Einheit einen weiteren Verkehrsteilnehmer als Regelobjekt für das ACC-Gerät zu verwerfen.

Die obige Aufgabe wird zudem gelöst durch ein Kraftfahrzeug mit einem System nach dem vorstehenden Anspruch und vorzugsweise einem Sensor in Form
- einer Frontkamera zum Erfassen von Kameradaten;
- einem Innenmikrofon zum Erfassen von Innengeräuschen; und/oder
- einem Außenmikrofon zum Erfassen von Außengeräuschen; und/oder
- einer Car2Car- und/oder Car2X-Kommunikations-Schnittstelle zum Einrichten einer Kommunikation zwischen dem Kraftfahrzeug und einem weiteren Kraftfahrzeug und/oder einer Infrastruktur.

Die obige Aufgabe wird schließlich gelöst durch ein Verfahren zum Generieren eines Vetos für ein ACC-Gerät eines Kraftfahrzeugs, insbesondere eines Kraftfahrzeugs wie zuvor definiert, umfassend die Schritte:
- Empfangen von Eingangsdaten mit Informationen zu einer Umgebung des Kraftfahrzeugs;
- Analysieren der Eingangsdaten;
- Ermitteln, ob ein von dem ACC-Gerät als Regelobjekt verwendeter weiterer Verkehrsteilnehmer als Regelobjekt für das ACC-Gerät verworfen wird;
- Generieren eines Vetos, wenn der weitere Verkehrsteilnehmer als Regelobjekt für das ACC-Gerät verworfen wird, wobei das Veto dazu eingerichtet ist, dass das das Veto empfangene ACC-Gerät den weiteren Verkehrsteilnehmer als Regelobjekt verwirft; und
- Übermitteln des Vetos an das ACC-Gerät.

Durch eine Veto-Einheit kann eine technisch einfache Möglichkeit geschaffen werden, um ein ACC-Gerät zu verbessern und insbesondere eine erhöhte Robustheit gegen Fehleinschätzungen zu erhalten. Ein ACC-Gerät funktioniert nur, wenn es auf einen vorausfahrenden Verkehrsteilnehmer regeln kann. Hierbei kann die Veto-Einheit vorteilhaft unterstützen und ermitteln, ob sich der vorausfahrende Verkehrsteilnehmer als Regelobjekt eignet. Insofern wird die Funktionalität des ACC-Geräts nicht beeinträchtigt. Ein falsches Regeln auf einen nicht geeigneten Verkehrsteilnehmer birgt ein hohes Unfallrisiko. Mit der offenbarten Lehre kann die Sicherheit im Straßenverkehr nachhaltig verbessert werden. Insbesondere eignet sich die Veto-Einheit auch als Nachrüstlösung. Es versteht sich, dass die Veto-Einheit auch von vornerein integriert sein kann. Vorzugsweise kann die Veto-Einheit auf bereits verbaute Sensoren zugreifen. Somit kann eine wirtschaftliche Veto-Einheit geschaffen werden. Insbesondere ist auch denkbar, dass die Funktionalität der Veto-Einheit in einem bereits vorhandenen Modul durch entsprechendes Umprogrammieren darstellbar ist.

In bevorzugter Ausgestaltung der Erfindung ist vorgesehen, dass die Veto-Einheit zur Installation in ein Kraftfahrzeug ausgebildet und vorzugsweise Teil eines Bordcomputers, des ACC-Geräts und/oder eines Navigationssystems ist, wobei das Kraftfahrzeug besonders bevorzugt ein zumindest teil-assistiert-fahrendes Kraftfahrzeug ist. Hierdurch kann die Veto-Einheit vorteilhaft in ein Kraftfahrzeug integriert werden. Vorzugsweise kann die Veto-Einheit hierbei auf die Kraftfahrzeuginfrastruktur, wie Sensordaten und/oder Kommunikationsschnittstellen zugreifen. Insbesondere kann die Veto-Einheit anhand von Navigationsdaten und/oder einem Lenkwinkeleinschlag einen Fahrerwunsch ermitteln und ein Veto generieren, wenn erkannt wird, dass das Regelobjekt nicht gemäß dem Fahrerwunsch weiterfährt. Beispielsweise kann ein vorrausfahrender Verkehrsteilnehmer als Regelobjekt verworfen werden, wenn erkannt wurde, dass der vorausfahrende Verkehrsteilnehmer abbiegt, wohingegen aus den Navigationsdaten und/oder einem Lenkwinkeleinschlag ermittelt wurde, dass der Fahrer geradeaus weiterfahren möchte.

In weiterer bevorzugter Ausgestaltung der Erfindung ist vorgesehen, dass die Eingangsdaten Kommunikationsdaten für eine Car2Car- und/oder Car2X-Kommunikation umfassen, wobei die Analyseeinheit dazu ausgebildet ist das Veto zu generieren, wenn in den Kommunikationsdaten übermittelt wird, dass der weitere Verkehrsteilnehmer als Regelobjekt ungeeignet ist, insbesondere wenn die Kommunikationsdaten Informationen bezüglich einer roten Ampel und/oder eines im Einsatz befindlichen Einsatzfahrzeugs vor dem Kraftfahrzeug umfassen. Hierdurch kann technisch einfach ermittelt werden, ob sich der vorausfahrende Verkehrsteilnehmer als Regelobjekt eignet. Die Veto-Einheit kann technisch einfach eine Information empfangen, die zuverlässig die Eignung des vorausfahrenden Verkehrsteilnehmers als Regelobjekt wiedergibt.

In weiterer bevorzugter Ausgestaltung der Erfindung ist vorgesehen, dass die Eingangsdaten Sensordaten eines Sensors in Form einer Kamera, insbesondere Frontkamera und/oder eines Mikrofons umfassen, wobei die Analyseeinheit dazu ausgebildet ist, das Veto zu generieren, wenn in den Sensordaten eine rote Ampel und/oder ein im Einsatz befindliches Einsatzfahrzeug vor dem Kraftfahrzeug detektierbar ist. Hierdurch kann die Veto-Einheit unabhängig von der Infrastruktur außerhalb des eigenen Kraftfahrzeugs ermitteln, ob sich der vorausfahrende Verkehrsteilnehmer als Regelobjekt eignet. Der Funktionsumfang kann erweitert werden. Insbesondere können auch weniger modern ausgestattete Verkehrsteilnehmer und/oder klassische, also nicht Car2X-fähige, Verkehrsinfrastruktur von der Veto-Einheit analysiert werden. Es versteht sich, dass nicht nur Ampeln sondern auch Verkehrsschilder nach einer Schildererkennung von der Veto-Einheit berücksichtigt werden können. Ferner kann die Schildererkennung auch in die Veto-Einheit integriert sein.

In weiterer bevorzugter Ausgestaltung der Erfindung ist vorgesehen, dass die Analyseeinheit dazu ausgebildet ist in den Sensordaten ein Signallicht, insbesondere in Form eines Blaulichts, eines im Einsatz befindlichen Einsatzfahrzeugs und/oder einen akustischen Signalgeber, insbesondere in Form eines Martinshorns, eines im Einsatz befindlichen Einsatzfahrzeugs zu detektieren. Hierdurch kann zuverlässig ein Erkennen eines im Einsatz befindlichen Einsatzfahrzeugs erfolgen. Insbesondere können zwei Anhaltspunkte für einen Einsatz ermittelt werden. Ein Ausfall eines Sensors kann kompensiert werden. Zudem kann es vorkommen, dass ein Martinshorn nicht aktiviert wurde, in diesem Fall kann alleine anhand des Blaulichts ermittelt werden, dass es sich um ein im Einsatz befindliches Einsatzfahrzeug handelt.

In weiterer bevorzugter Ausgestaltung der Erfindung ist vorgesehen, dass die Ausgangsschnittstelle zum Übermitteln eines Steuerbefehls an eine Ausgabe-Einheit ausgebildet ist, wobei der Steuerbefehl eine Ausgabe eines Hinweises an einen Fahrzeuginsassen bewirkt, wobei der Hinweis eine Information darüber enthält, dass ein weiterer Verkehrsteilnehmer als Regelobjekt für das ACC-Gerät verworfen wird. Hierdurch kann technisch einfach der Fahrer des Kraftfahrzeugs vorgewarnt werden, dass er selbst die Kontrolle über sein Kraftfahrzeug übernehmen soll. Die Sicherheit wird weiter erhöht.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Mit Car-to-Car Communication (Car2Car, C2C oder vehicle2vehicle - V2V) wird der Austausch von Informationen und Daten zwischen Kraftfahrzeugen bezeichnet, um dem Fahrer frühzeitig kritische und gefährliche Situationen zu melden. Car2Car ist ein Spezialfall von Car2X (auch unter V2X bekannt), der Kommunikation von Fahrzeugen mit ihrer Umgebung (neben anderen Verkehrsteilnehmern insbesondere der Infrastruktur) bezeichnet.

Ein Abstandsregeltempomat oder ein ACC-Gerät ist eine Geschwindigkeitsregelanlage in Kraftfahrzeugen, die bei der Regelung den Abstand zu einem vorausfahrenden Fahrzeug als zusätzliche Rückführ- und Regelgröße einbezieht. Der Abstandsregeltempomat gehört zu den Fahrerassistenzsystemen. In der internationalen Automobilindustrie hat sich der englische Ausdruck Adaptive Cruise Control (ACC) etabliert (auf deutsch: adaptive Geschwindigkeitsregelung). Das System wird ebenfalls als automatische Distanzregelung (ADR) bezeichnet, wobei sich noch weitere Bezeichnungen verbreiten können, da Automobilhersteller ihre Systeme gerne individuell benennen, um sich besser abzugrenzen. Das System ist oft Bestandteil eines radargestützten Notbremsassistenten und bei einigen Autos mit einer Stop-and-Go-Funktion ausgestattet.

Die Erfindung wird nachfolgend in Ausführungsbeispielen anhand der zugehörigen Zeichnungen erläutert. Es zeigen:
- Figur 1: eine schematische Darstellung einer erfindungsgemäßen Veto-Einheit;
- Figur 2: eine schematische Darstellung eines erfindungsgemäßen Systems mit einer Veto-Einheit und einem ACC-Gerät;
- Figur 3: eine schematischen Darstellung einer Situation im Straßenverkehr;
- Figur 4: eine schematischen Darstellung einer weiteren Situation im Straßenverkehr; und
- Figur 5: schematisch die Schritte eines erfindungsgemäßen Verfahrens.

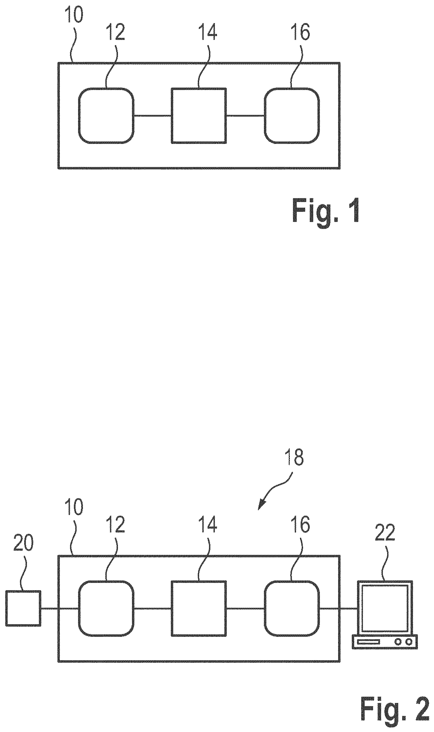

Figur 1 zeigt eine schematische Darstellung einer Veto-Einheit 10 für ein nicht gezeigtes ACC-Gerät eines Kraftfahrzeugs. Die Veto-Einheit 10 umfasst eine Eingangsschnittstelle 12, eine Analyseeinheit 14 und eine Ausgangsschnittstelle 16.

Die Eingangsschnittstelle 12 ist zum Empfangen von Eingangsdaten mit Informationen zu einer Umgebung des Kraftfahrzeugs ausgebildet. Die Eingangsdaten können dabei Sensordaten von einem oder mehreren Sensoren des Kraftfahrzeugs umfassen. Ferner können die Eingangsdaten auch Kommunikationsdaten, beispielsweise von einer Car2X- oder Car2car-Kommunikation, umfassen.

Die Analyseeinheit 14 ist dazu ausgebildet, die Eingangsdaten zu analysieren und basierend auf den Eingangsdaten zu ermitteln, ob ein weiterer Verkehrsteilnehmer als Regelobjekt für das ACC-Gerät verworfen wird, und ein Veto zu generieren, wenn der weitere Verkehrsteilnehmer als Regelobjekt für das ACC-Gerät verworfen wird. Beispielsweise kann anhand von Sensordaten ermittelt werden, ob eine Verkehrsregel, wie eine rote Ampel oder ein Verkehrsschild ein direktes Anfahren und Folgen des vorausfahrenden Verkehrsteilnehmers verbietet. Ferner kann anhand von Kommunikationsdaten ermittelt werden, ob eine Ampel auf rot umgeschaltet hat oder das vorausfahrende Kraftfahrzeug ein im Einsatz befindliches Einsatzfahrzeug ist. In all diesen Fällen ist das vorausfahrende Kraftfahrzeug vorzugsweise als Regelobjekt ungeeignet und die Analyseeinheit 14 generiert ein Veto.

Die Ausgangsschnittstelle 16 ist dazu ausgebildet, ein Veto zu übermitteln, wenn die Analyseeinheit 14 ermittelt, dass der weitere Verkehrsteilnehmer als Regelobjekt für das ACC-Gerät verworfen wird. Dabei kann das ACC-Gerät das Veto empfangen und das vorausfahrende Kraftfahrzeug als Regelobjekt verwerfen.

Es versteht sich, dass die Eingangsschnittstelle 12 und die Ausgangsschnittstelle 16 zu einer einzigen Schnittstelle kombinierbar sind. Es versteht sich ferner, dass die Schnittstellen 12, 16 sowohl drahtlos als auch kabelgebunden ausgebildet sein können. Insbesondere können die Schnittstellen auch als Softwareschnittstellen ausgebildet sein.

Figur 2 zeigt schematisch ein erfindungsgemäßes System 18 mit einer Veto-Einheit 10, einem Sensor 20 und einem ACC-Gerät 22.

Es versteht sich, dass der Sensor 20 direkt mit der Veto-Einheit 10 kommunizieren kann. Ferner kann auch vorgesehen sein, dass die Veto-Einheit 10 auf einen Sensor 20 des Kraftfahrzeugs zurückgreift. Insbesondere ist es denkbar, dass die Veto-Einheit 10 Sensordaten eines Sensors 20 empfängt, die auch von dem ACC-Gerät 22 zum Regeln verwendet werden. Das ACC-Gerät 22 ist in der Figur 2 stark vereinfacht dargestellt.

Der Sensor 20 kann beispielsweise eine Kamera, insbesondere eine Frontkamera und/oder ein Mikrofon insbesondere ein Außenmikrofon umfassen.

Es versteht sich, dass das System 18 zusätzlich oder alternativ eine Kommunikationsschnittstelle zur Car2X- oder Car2Car-Kommunikation umfassen kann.

Besonders bevorzugt ist das gezeigte System 18 Teil eines Bordcomputers, eines Navigationssystems und/oder eines anderen im Kraftfahrzeug verbauten Moduls. Hierdurch können die Kosten sowie die Bauraumanforderungen eines solchen Systems 18 gering gehalten werden.

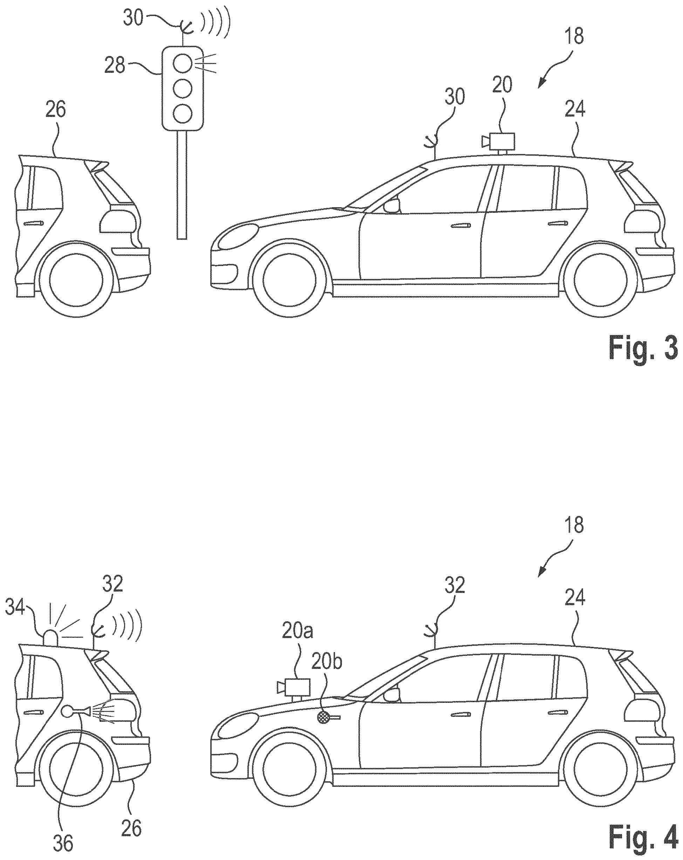

In Figur 3 ist schematisch eine Situation im Straßenverkehr gezeigt. Ein erstes Kraftfahrzeug 24 ist mit einem erfindungsgemäßen System 18 ausgestattet. Aus Gründen der Übersicht wurde auf eine detaillierte Darstellung des Systems 18 verzichtet.

Das ACC-Gerät 22 des ersten Kraftfahrzeugs 24 regelt auf einen weiteren Verkehrsteilnehmer in Form eines ein vorausfahrenden zweiten Kraftfahrzeugs 26. Zwischen dem ersten Kraftfahrzeug 24 und dem zweiten Kraftfahrzeug 26 befindet sich eine Ampel 28, die in dem gezeigten Beispiel rot zeigt. Ob das zweite Kraftfahrzeug 26 die rote Ampel 28 ignoriert hat oder die Ampel 28 gerade auf rot geschaltet hat ist unerheblich.

Das System 18 erfasst mittels des Sensors 20, der in Form einer Frontkamera ausgebildet ist, die rote Ampel 28. Daraufhin generiert die Veto-Einheit 10 ein Veto, da das vorausfahrende zweite Kraftfahrzeug 26 sich nicht mehr als Regelobjekt für das ACC-Gerät 22 eignet. Ein Regeln auf das zweite Kraftfahrzeug 26 würde dazu führen, dass das erste Kraftfahrzeug 24 die rote Ampel 28 überfährt. Durch das Veto wird das zweite Kraftfahrzeug 26 als Regelobjekt verworfen, sodass vorzugsweise der Fahrer des ersten Kraftfahrzeugs 24 die Kontrolle über das erste Kraftfahrzeug 24 übernimmt und das erste Kraftfahrzeug 24 bremst. Es versteht sich, dass zudem eine Warnung an den Fahrer ausgegeben werden kann. Beispielsweise kann ein Warnton ausgegeben werden oder ein schriftlicher und/oder akustisch gesprochener Hinweis, wie "Ampel rot, keine Regelung auf vorausfahrendes Kraftfahrzeug möglich - bitte Kontrolle übernehmen" erfolgen.

Ergänzend oder alternativ ist die Ampel 28 mit einer Car2X-Kommunikationsschnittstelle 30 ausgestattet und kann aktiv den Status "Ampel rot" oder dergleichen über die Car2X-Kommunikationsschnittstelle 30 übermitteln. Das erste Kraftfahrzeug 24 weist ebenfalls eine Car2X-Kommunikationsschnittstelle 30 auf und kann den von der Ampel 28 ausgesendeten Status empfangen. Auf diese Weise kann zuverlässig vom System 18 ermittelt werden, dass die Ampel 28 auf rot umgeschaltet hat. Folglich kann auch in diesem Fall ein Veto generiert werden und wie oben bereits beschrieben das zweite Kraftfahrzeug 26 als Regelobjekt verworfen werden.

Es versteht sich, dass ein Generieren eines Vetos sowohl ausschließlich basierend auf den Sensordaten oder des mittels Ca2X-Kommunikation übermittelten Status erfolgen kann. Es versteht sich ferner, dass auch eine Kombination der Sensordaten und des mittels der Car2X-Kommunikation übermittelten Status erfolgen kann.

In Figur 4 ist schematisch eine weitere Situation im Straßenverkehr gezeigt. Ein erstes Kraftfahrzeug 24 ist mit einem erfindungsgemäßen System 18 ausgestattet. Im Unterschied zu der in Figur 3 gezeigten Situation ist keine Ampel 28 vorhanden. Ferner umfasst das zweite vorausfahrende Kraftfahrzeug 26 ein sich im Einsatz befindendes Einsatzfahrzeug.

Das vorausfahrende zweite Kraftfahrzeug 26 eignet sich folglich nicht als Regelobjekt für das ACC-Gerät 22. Das System 18 verfügt über mehrere Möglichkeiten zu ermitteln, dass das vorausfahrende zweite Kraftfahrzeug 26 als Regelobjekt nicht geeignet ist. Es versteht sich, dass jede der folgenden Möglichkeiten einzeln oder in Kombination miteinander verwendbar sind.

Im gezeigten Beispiel ist das Einsatzfahrzeug mit einer Car2Car-Kommunikationsschnittstelle 32 ausgestattet und kann mittels dieser Car2Car-Kommunikationsschnittstelle 32 aktiv den Status "im Einsatz" oder dergleichen übermitteln. Das System 18 ist dazu ausgebildet den Status oder zumindest Informationen bezüglich des Status zu empfangen, da das erste Kraftfahrzeug 24 ebenfalls mit einer Car2Car-Kommunikationsschnittstelle 32 ausgestattet ist. Basierend auf dem Status kann das System 18 ein Veto generieren, da sich das Einsatzfahrzeug nicht als Regelobjekt für das ACC-Gerät 22 eignet.

Das Einsatzfahrzeug ist mit einem Signallicht 34 ausgestattet, das in dem gezeigten Beispiel aufleuchtet, um anzuzeigen, dass sich das Einsatzfahrzeug aktiv in einem Einsatz befindet. Als Beispiel für solche Signallichter 34 sei das Blaulicht eines Polizeifahrzeugs, Krankentransportwagens, Notarztwagens oder eines Feuerwehrfahrzeugs erwähnt. Es versteht sich, dass noch weitere Einsatzfahrzeuge denkbar sind, die ein Blaulicht umfassen.

Das erste Kraftfahrzeug 24 ist mit einem ersten Sensor 20a in Form einer Außenkamera insbesondere einer Frontkamera ausgestattet. Das System 18 kann anhand der Sensordaten der Frontkamera ermitteln, dass das Signallicht 34 eingeschaltet ist. Beispielsweise kann hierfür ein Bilderkennungsalgorithmus, wie prinzipiell im Stand der Technik bekannt, angewandt werden. Wird erkannt, dass das Signallicht 34 eingeschaltet ist, generiert das System 18 ein Veto, da sich das Einsatzfahrzeug nicht als Regelobjekt für das ACC-Gerät 22 eignet.

Das Einsatzfahrzeug ist zudem mit einem akustischen Signalgeber 36, insbesondere einem Martinshorn, ausgestattet, das in dem gezeigten Beispiel einen Warnton ausgibt, um akustisch darauf aufmerksam zu machen, dass sich das Einsatzfahrzeug aktiv in einem Einsatz befindet. Insbesondere können Einsatzfahrzeuge, die mit einem Blaulicht ausgestattet sind, ergänzend ein Martinshorn aufweisen. Das erste Kraftfahrzeug 24 ist mit einem zweiten Sensor 20b in Form eines Außenmikrofons ausgestattet. Es versteht sich, dass auch eine Detektion mittels eines Innenmikrofons denkbar ist.

Das System 18 kann anhand der Sensordaten des Außenmikrofons ermitteln, dass das Martinshorn eingeschaltet ist. Beispielsweise kann hierfür ein Tonerkennungsalgorithmus, wie prinzipiell im Stand der Technik bekannt, angewandt werden. Insbesondere kann hierbei die immer wiederkehrende Tonfolge und/oder eine Tonhöhe beziehungsweise der charakteristische Klang des Martinshorns zur Detektion und Analyse ausgenutzt werden. Wird erkannt, dass das Martinshorn aktiv ist, generiert das System 18 ein Veto, da sich das Einsatzfahrzeug nicht als Regelobjekt für das ACC-Gerät 22 eignet.

Wird das vorrausfahrende zweite Kraftfahrzeug 26 als Regelobjekt verworfen, kann, wie bereits oben beschrieben, ein Hinweis an den Fahrer des ersten Kraftfahrzeugs 24 erfolgen.

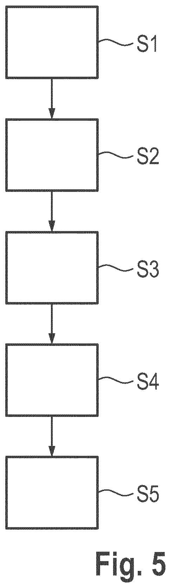

In Figur 5 sind schematisch die Schritte eines erfindungsgemäßen Verfahrens zum Generieren eines Vetos für ein für ein ACC-Gerät 22 eines Kraftfahrzeugs 24 dargestellt. In einem ersten Schritt S1 erfolgt ein Empfangen von Eingangsdaten mit Informationen zu einer Umgebung des Kraftfahrzeugs 24. Daraufhin werden in einem zweiten Schritt S2 die Eingangsdaten analysiert. In einem dritten Schritt S3 erfolgt ein Ermitteln, ob ein weiterer Verkehrsteilnehmer als Regelobjekt für das ACC-Gerät 22 verworfen wird. Daraufhin erfolgt in einem vierten Schritt S4 ein Generieren eines Vetos, wenn der weitere Verkehrsteilnehmer als Regelobjekt für das ACC-Gerät 22 verworfen wird. In einem fünften Schritt S5 wird schließlich das Veto an das ACC-Gerät 22 übermittelt.

### Bezugszeichenliste

- 10: Veto-Einheit
- 12: Eingangsschnittstelle
- 14: Analyseeinheit
- 16: Ausgangsschnittstelle
- 18: System
- 20: Sensor
- 20a: erster Sensor
- 20b: zweiter Sensor
- 22: ACC-Gerät
- 24: erstes Kraftfahrzeug
- 26: zweites Kraftfahrzeug
- 28: Ampel
- 30: Car2X-Kommunikationsschnittstelle
- 32: Car2Car-Kommunikationsschnittstelle
- 34: Signallicht
- 36: akustischer Signalgeber
- S1 bis S5: Verfahrensschritte

## Patentansprüche

1. Veto-Einheit (10) für ein ACC-Gerät (22) eines Kraftfahrzeugs (24), mit:
- einer Eingangsschnittstelle (12) zum Empfangen von Eingangsdaten mit Informationen zu einer Umgebung des Kraftfahrzeugs (24);
- einer Analyseeinheit (14), die dazu ausgebildet ist, die Eingangsdaten zu analysieren;
- einer Ausgangsschnittstelle (16) zum Übermitteln eines Vetos,
**dadurch gekennzeichnet, dass**
- die Analyseeinheit (14) dazu ausgebildet ist, basierend auf den Eingangsdaten zu ermitteln, ob ein von dem ACC-Gerät (22) als Regelobjekt verwendeter weiterer Verkehrsteilnehmer als Regelobjekt für das ACC-Gerät (22) verworfen wird und ein Veto zu generieren, wenn der weitere Verkehrsteilnehmer als Regelobjekt für das ACC-Gerät (22) verworfen wird, wobei das Veto dazu eingerichtet ist, dass das das Veto empfangende ACC-Gerät (22) den weiteren Verkehrsteilnehmer als Regelobjekt verwirft; und
- die Ausgangsschnittstelle (16) dazu ausgebildet ist, das Veto zu übermitteln, wenn die Analyseeinheit (14) ermittelt, dass der weitere Verkehrsteilnehmer als Regelobjekt für das ACC-Gerät (22) verworfen wird.

2. Veto-Einheit (10) nach Anspruch 1, **dadurch gekennzeichnet, dass** die Veto-Einheit (10) zur Installation in ein Kraftfahrzeug (24) ausgebildet und vorzugsweise Teil eines Bordcomputers, des ACC-Geräts (22) und/oder eines Navigationssystems ist, wobei das Kraftfahrzeug (24) besonders bevorzugt ein zumindest teil-assistiert-fahrendes Kraftfahrzeug (24) ist.

3. Veto-Einheit (10) nach einem der vorstehenden Ansprüche, **dadurch gekennzeichnet, dass** die Eingangsdaten Kommunikationsdaten für eine Car2Car- und/oder Car2X-Kommunikation umfassen, wobei die Analyseeinheit (14) dazu ausgebildet ist das Veto zu generieren wenn in den Kommunikationsdaten übermittelt wird, dass der weitere Verkehrsteilnehmer als Regelobjekt ungeeignet ist, insbesondere wenn die Kommunikationsdaten Informationen bezüglich einer roten Ampel (28) und/oder eines im Einsatz befindlichen Einsatzfahrzeugs vor dem Kraftfahrzeug (24) umfassen.

4. Veto-Einheit (10) nach einem der vorstehenden Ansprüche, **dadurch gekennzeichnet, dass** die Eingangsdaten Sensordaten eines Sensors (20, 20a, 20b) in Form einer Kamera, insbesondere Frontkamera und/oder eines Mikrofons umfassen, wobei die Analyseeinheit (14) dazu ausgebildet ist das Veto zu generieren, wenn in den Sensordaten eine rote Ampel (28) und/oder ein im Einsatz befindliches Einsatzfahrzeug vor dem Kraftfahrzeug (24) detektierbar ist.

5. Veto-Einheit (10) nach dem vorstehenden Anspruch, **dadurch gekennzeichnet, dass** die Analyseeinheit (14) dazu ausgebildet ist in den Sensordaten ein Signallicht (34), insbesondere in Form eines Blaulichts, eines im Einsatz befindlichen Einsatzfahrzeugs und/oder einen akustischen Signalgeber (36), insbesondere in Form eines Martinshorns, eines im Einsatz befindlichen Einsatzfahrzeugs zu detektieren.

6. Veto-Einheit (10) nach einem der vorstehenden Ansprüche, **dadurch gekennzeichnet, dass** die Ausgangsschnittstelle (16) zum Übermitteln eines Steuerbefehls an eine Ausgabe-Einheit ausgebildet ist, wobei der Steuerbefehl eine Ausgabe eines Hinweises an einen Fahrzeuginsassen bewirkt, wobei der Hinweis eine Information darüber enthält, dass ein weiterer Verkehrsteilnehmer als Regelobjekt für das ACC-Gerät (22) verworfen wird.

7. System (18) umfassend eine Veto-Einheit (10) nach einem der vorstehenden Ansprüche und ein ACC-Gerät (22), wobei das ACC-Gerät (22) dazu ausgebildet ist, in Reaktion auf ein Veto der Veto-Einheit (10) einen weiteren Verkehrsteilnehmer als Regelobjekt für das ACC-Gerät (22) zu verwerfen.

8. Kraftfahrzeug (24) mit einem System (18) nach dem vorstehenden Anspruch und vorzugsweise einem Sensor (20, 20a, 20b) in Form
- einer Frontkamera zum Erfassen von Kameradaten;
- eines Innenmikrofons zum Erfassen von Innengeräuschen; und/oder
- eines Außenmikrofons zum Erfassen von Außengeräuschen; und/oder
- einer Car2Car- und/oder Car2X-Kommunikationsschnittstelle zum Einrichten einer Kommunikation zwischen dem Kraftfahrzeug (24) und einem weiteren Kraftfahrzeug (26) und/oder einer Infrastruktur.

9. Verfahren zum Generieren eines Vetos für ein ACC-Gerät (22) eines Kraftfahrzeugs (24), insbesondere eines Kraftfahrzeugs (24) nach dem vorstehenden Anspruch, umfassend die Schritte:
- Empfangen (S1) von Eingangsdaten mit Informationen zu einer Umgebung des Kraftfahrzeugs (24);
- Analysieren (S2) der Eingangsdaten;
- Ermitteln (S3), ob ein von dem ACC-Gerät (22) als Regelobjekt verwendeter weiterer Verkehrsteilnehmer als Regelobjekt für das ACC-Gerät (22) verworfen wird;
- Generieren (S4) eines Vetos, wenn der weitere Verkehrsteilnehmer als Regelobjekt für das ACC-Gerät (22) verworfen wird, wobei das Veto dazu eingerichtet ist, dass das das Veto empfangene ACC-Gerät (22) den weiteren Verkehrsteilnehmer als Regelobjekt verwirft; und
- Übermitteln (S5) des Vetos an das ACC-Gerät (22).

10. Computer-Programm mit Programm-Code-Mitteln, um alle Schritte eines Verfahrens nach dem vorstehenden Anspruch durchzuführen, wenn das Computer-Programm auf einem Computer oder einer entsprechenden Recheneinheit ausgeführt wird.

## Claims

1. Veto unit (10) for an ACC device (22) of a motor vehicle (24), comprising:
- an input interface (12) for receiving input data comprising information on an environment of the motor vehicle (24);
- an analysis unit (14) designed to analyze the input data;
- an output interface (16) for transmitting a veto,
**characterized in that:**
- the analysis unit (14) is designed to determine, based on the input data, whether an additional road user used by the ACC device (22) as a control object is rejected as a control object for the ACC device (22) and to generate a veto if the additional road user is rejected as a control object for the ACC device (22), the veto being configured so that the ACC device (22) receiving the veto rejects the additional road user as a control object; and
- the output interface (16) is designed to transmit the veto if the analysis unit (14) determines that the additional road user is rejected as a control object for the ACC device (22).

2. Veto unit (10) according to claim 1, **characterized in that** the veto unit (10) is designed for installation in a motor vehicle (24) and is preferably part of an on-board computer, the ACC device (22) and/or a navigation system, the motor vehicle (24) particularly preferably being an at least partially assisted driving motor vehicle (24).

3. Veto unit (10) according to any of the preceding claims, **characterized in that** the input data comprise communication data for Car2Car communication and/or Car2X communication, the analysis unit (14) being designed to generate the veto if in the communication data it is transmitted that the additional road user is unsuitable as a control object, in particular if the communication data comprise information regarding a red traffic light (28) and/or an emergency vehicle in use in front of the motor vehicle (24).

4. Veto unit (10) according to any of the preceding claims, **characterized in that** the input data comprise sensor data from a sensor (20, 20a, 20b) in the form of a camera, in particular a front camera and/or a microphone, the analysis unit (14) being designed to generate the veto if a red traffic light (28) and/or an emergency vehicle in use in front of the motor vehicle (24) can be detected in the sensor data.

5. Veto unit (10) according to the preceding claim, **characterized in that** the analysis unit (14) is designed to detect, in the sensor data, a signal light (34), in particular in the form of a blue light, of an emergency vehicle in use and/or an acoustic signal generator (36), in particular in the form of a siren, of an emergency vehicle in use.

6. Veto unit (10) according to any of the preceding claims, **characterized in that** the output interface (16) is designed to transmit a control command to an output unit, the control command causing a notice to be issued to a vehicle occupant, the notice containing information that an additional road user is rejected as a control object for the ACC device (22).

7. System (18) comprising a veto unit (10) according to any of the preceding claims and an ACC device (22), wherein the ACC device (22) is designed to reject an additional road user as a control object for the ACC device (22) in response to a veto of the veto unit (10).

8. Motor vehicle (24) comprising a system (18) according to the preceding claim and preferably a sensor (20, 20a, 20b) in the form of:
- a front camera for capturing camera data;
- an internal microphone for capturing interior noise; and/or
- an external microphone for capturing external noise; and/or
- a Car2Car communication interface and/or Car2X communication interface for establishing communication between the motor vehicle (24) and an additional motor vehicle (26) and/or an infrastructure.

9. Method for generating a veto for an ACC device (22) of a motor vehicle (24), in particular a motor vehicle (24) according to the preceding claim, the method comprising the steps:
- receiving (S1) input data comprising information on an environment of the motor vehicle (24);
- analyzing (S2) the input data;
- determining (S3) whether an additional road user used as a control object by the ACC device (22) is rejected as a control object for the ACC device (22);
- generating (S4) a veto if the additional road user is rejected as a control object for the ACC device (22), wherein the veto is configured so that the ACC device (22) receiving the veto rejects the additional road user as a control object; and
- transmitting (S5) the veto to the ACC device (22).

10. Computer program comprising program code means for carrying out all steps of a method according to the preceding claim when the computer program is executed on a computer or a corresponding computing unit.

## Revendications

1. Unité de veto (10) pour un appareil régulateur de vitesse adaptatif (ACC) (22) d'un véhicule automobile (24), comportant :
- une interface d'entrée (12) permettant de recevoir des données d'entrée comportant des informations concernant un environnement du véhicule automobile (24) ;
- une unité d'analyse (14) qui est configurée pour analyser les données d'entrée ;
- une interface de sortie (16) permettant de transmettre un veto,
**caractérisée en ce que**
- l'unité d'analyse (14) est configurée pour déterminer, sur la base des données d'entrée, si un autre usager de la route utilisé par l'appareil ACC (22) comme objet de régulation est rejeté comme objet de régulation pour l'appareil ACC (22) et pour générer un veto si l'autre usager de la route est rejeté comme objet de régulation pour l'appareil ACC (22), dans laquelle le veto est configuré pour que l'appareil ACC (22) recevant le veto rejette l'autre usager de la route comme objet de régulation ; et
- l'interface de sortie (16) est configurée pour transmettre le veto lorsque l'unité d'analyse (14) détermine que l'autre usager de la route est rejeté comme objet de régulation pour l'appareil ACC (22).

2. Unité de veto (10) selon la revendication 1, **caractérisée en ce que** l'unité de veto (10) est conçue pour être installée dans un véhicule automobile (24) et fait de préférence partie d'un ordinateur de bord, de l'appareil ACC (22) et/ou d'un système de navigation, dans laquelle le véhicule automobile (24) est de manière particulièrement préférée un véhicule automobile (24) à conduite au moins partiellement assistée.

3. Unité de veto (10) selon l'une des revendications précédentes,
**caractérisée en ce que** les données d'entrée comprennent des données de communication pour une communication de véhicule à véhicule et/ou de véhicule à X, dans laquelle l'unité d'analyse (14) est configurée pour générer le veto lorsque les données de communication transmettent le fait que l'autre usager de la route n'est pas approprié comme objet de régulation, en particulier lorsque les données de communication comprennent des informations concernant un feu rouge (28) et/ou un véhicule d'intervention en service devant le véhicule automobile (24).

4. Unité de veto (10) selon l'une des revendications précédentes,
**caractérisée en ce que** les données d'entrée comprennent des données de capteur d'un capteur (20, 20a, 20b) sous la forme d'une caméra, en particulier d'une caméra frontale et/ou d'un microphone, dans laquelle l'unité d'analyse (14) est configurée pour générer le veto lorsqu'un feu rouge (28) et/ou un véhicule d'intervention en service devant le véhicule automobile (24) peuvent être détectés dans les données de capteur.

5. Unité de veto (10) selon la revendication précédente,
**caractérisée en ce que** l'unité d'analyse (14) est configurée pour détecter dans les données de capteur un feu de signalisation (34), en particulier sous la forme d'un feu bleu, d'un véhicule d'intervention en service, et/ou un générateur de signal acoustique (36), en particulier sous la forme d'une sirène, d'un véhicule d'intervention en service.

6. Unité de veto (10) selon l'une des revendications précédentes,
**caractérisée en ce que** l'interface de sortie (16) est configurée pour transmettre un ordre de commande à une unité de sortie, dans laquelle l'ordre de commande provoque la sortie d'une indication à un occupant du véhicule, dans laquelle l'indication contient une information concernant le fait qu'un autre usager de la route est rejeté comme objet de régulation pour l'appareil ACC (22).

7. Système (18) comprenant une unité de veto (10) selon l'une des revendications précédentes et un appareil ACC (22), dans lequel l'appareil ACC (22) est configuré pour rejeter un autre usager de la route comme objet de régulation pour l'appareil ACC (22) en réponse à un veto de l'unité de veto (10).

8. Véhicule automobile (24) comportant un système (18) selon la revendication précédente et, de préférence, un capteur (20, 20a, 20b) sous la forme
- d'une caméra frontale pour la détection de données de caméra ;
- d'un microphone intérieur pour la détection de bruits intérieurs ; et/ou
- d'un microphone extérieur pour la détection de bruits extérieurs ; et/ou
- une interface de communication de véhicule à véhicule et/ou de véhicule à X pour configurer une communication entre le véhicule automobile (24) et un autre véhicule automobile (26) et/ou une infrastructure.

9. Procédé pour la génération d'un veto pour un appareil ACC (22) d'un véhicule automobile (24), en particulier d'un véhicule automobile (24) selon la revendication précédente, comprenant les étapes consistant à :
- recevoir (S1) des données d'entrée comportant des informations concernant un environnement du véhicule automobile (24) ;
- analyser (S2) les données d'entrée ;
- déterminer (S3) si un autre usager de la route utilisé comme objet de régulation par l'appareil ACC (22) est rejeté comme objet de régulation pour l'appareil ACC (22) ;
- générer (S4) un veto lorsque l'autre usager de la route est rejeté comme objet de régulation pour l'appareil ACC (22), dans lequel le veto est configuré pour que l'appareil ACC (22) recevant le veto rejette l'autre usager de la route comme objet de régulation ; et
- transmettre (S5) le veto à l'appareil ACC (22).

10. Programme informatique comportant des moyens de code de programme afin d'exécuter toutes les étapes d'un procédé selon la revendication précédente, lorsque le programme informatique est exécuté sur un ordinateur ou une unité de calcul correspondante.
